# EUROPEAN PATENT SPECIFICATION

(11) **EP 3 450 263 B1**
(45) Date of publication and mention of the grant of the patent: **22.05.2024**
(21) Application number: 17773350.8
(22) Date of filing: 23.03.2017
(51) Int. Cl.: B60R 25/04

(54) **PARENTAL CONTROL SYSTEM FOR MOTORCYCLES**
ELTERNKONTROLLSYSTEM FÜR MOTORRÄDER
SYSTÈME DE CONTRÔLE PARENTAL À UTILISER AVEC DES MOTOCYCLES

(30) Priority: 01.04.2016 ES 201630395
(43) Date of publication of application: 06.03.2019
(73) Proprietor: Torrot Electric Europa SA, 17190 Salt (Girona) (ES)
(72) Inventor: CONTRERAS TORRES, Ivan, 17190 Salt (Girona) (ES)
(74) Representative: Padial Martinez, Ana Belen
(86) International application number: PCT/ES2017/070173
(87) International publication number: WO 2017/168020

(56) References cited:
- WO-A2-2007/094988
- US-A1- 2003 036 823
- US-A1- 2011 137 520
- US-A1- 2011 137 520
- US-A1- 2014 005 859
- US-A1- 2014 163 774
- US-A1- 2014 309 863
- US-A1- 2014 309 863
- US-A1- 2017 084 169
- US-B1- 7 822 514

## Description

### PURPOSE OF THE INVENTION

The object of the invention is a parental control system applicable to motorcycles comprising, installed on the motorcycle, a controller and a wireless communication module with an external mobile terminal provided with a computer application, which allows modifying operating parameters of the motorcycle stored in the controller, and enabling or disabling a parental control.

### PRIOR ART

Nowadays, it is common that vehicles carry an on-board computer or a control unit that allows collecting and storing information about the operation of different components of the vehicle. Such a prior art control unit is known from e.g. US 2014/098863.

It is also known the use of controllers allowing to store adjustable operating parameters on motorcycles, for example: power, speed, accelerator sensitivity, engine regeneration, etc. This controller acts on different components of the motorcycle in order for the latter to operate within the predetermined parameters.

Adjusting these parameters might be particularly recommended when the motorcycle is meant to be used by different drivers under parental control or a supervisor's control. However, modifying the operating parameters of the controller is currently very difficult, given that it is necessary to connect the mentioned controller to an external computer, . which means that a part of the motorcycle needs to be disassembled to access the cable connection ports equipped in the controller.

This prevents changes on the operating parameters of the controller from being quickly and easily performed, and without the intervention of a garage or a specialized person. In those cases where age or condition of the eventual driver or drivers of a motorcycle require parental control or a supervisor's control, it would be convenient that the person in charge of supervising the use of the motorcycle could quickly, easily and safely modify the operating parameters of the motorcycle and could remotely establish a parental control causing the motorcycle to stop anytime or that the motorcycle stops automatically when it separates from a preprogrammed distance of the person in charge of supervising the use.

The applicant is not aware of the existence of any precedents in the state of the art allowing reaching these purposes and which display technical features or operational advantages similar to the ones of the system of the present invention.

### DESCRIPTION OF THE INVENTION

The parental control system applicable to motorcycles, which is the object of this invention, is of the type described in the precaracterizing portion of the main claim, in other words, of the type comprising a controller installed on the motorcycle and equipped with inputs for capturing different operating parameters (power, speed, accelerator sensitivity, engine regeneration, etc.) of the motorcycle, and outputs for controlling the operation of a series of components of the motorcycle dependent on adjustable parameters entered in said controller.

This parental control system presents special constructive features addressed to satisfactorily solve the afore-mentioned problems, and in particular, to allow establishing a wireless connection between the mentioned controller and an external parental control mobile terminal provided with a computer application suitable for remotely, quickly and easily modifying the operating parameters stored in the controller and enable or disable the parental control.

For this end, and according to the invention, this system comprises: - a wireless communication module via Bluetooth installed on the motorcycle, connected to the controller and equipped with a single connection port via Bluetooth with an external parental-control mobile terminal consisting of a smartphone, tablet or similar, and; - a computer application installed on the mobile terminal suitable for: - displaying the current motorcycle operating parameters stored in the controller, and accepting or modifying said operating parameters, and enabling or disabling a parental control which, when enabled: sends to the controller an immediate stop signal for the motorcycle when the user selects this option in the application, and which causes an automatic stop by the controller when the wireless connection between the controller and said mobile terminal is interrupted or when a preprogrammed distance between the controller and the mobile terminal is exceeded.

With the mentioned features, this parental control system enables to easily, quickly, and remotely modify the operating parameters stored in the motorcycle controller, without the need of disassembling or physically handling the components installed on the motorcycle.

It also allows, when the parental control is enabled, that the supervisor in charge of controlling the use of the motorcycle could stop it anytime, by selecting this option on the application of the mobile terminal.

When there is no connection with the mobile terminal, the communication module allows the normal operation of the motorcycle with no need of being disconnected from the controller, because the default mode with no orders from the mobile terminal is "enabled motorcycle". It is not necessary to connect the controller always when one wishes to use the motorcycle.

These features and other features of the invention shall be better understood in view of an example of an embodiment of the parental control system of this invention.

### BRIEF DESCRIPTION OF THE DRAWINGS

In order to complete this description and aiming to make the understanding of the invention features easier, attached to the present specification there is a set of drawings wherein, for illustrative and not limitative purposes, the following is represented:
- Figure 1 shows a schematic view of an example of an embodiment of the parental control system applicable to motorcycles according to the invention.
- Figure 2 schematically shows an operating diagram of the system of the invention.

### EMBODIMENTS OF THE INVENTION

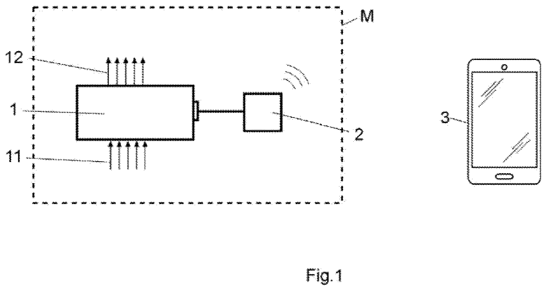

As shown in figure 1, this system comprises a controller (1) installed on a motorcycle (M) and equipped with inputs (11) for capturing different operating parameters (speed, supplied power, accelerator sensitivity, engine regeneration, etc.) and outputs (12) for controlling the operation of a series of components of the motorcycle dependent on adjustable parameters entered in said controller (1).

The parental control system comprises a wireless communication module (2) connected to the controller (1) and equipped with a single connection port for connection via Bluetooth to an external parental control mobile terminal which can be carried by a person responsible for supervising the use of the motorcycle, and constituted in this case by a smartphone.

The system is provided with a computer application suitable for remotely accepting or modifying and through the mobile terminal (3), the operating parameters stored in the controller (1) of the motorcycle, adjusting them in each case to the operating mode chosen for each driver, the application also allowing, enabling or disabling a parental control.

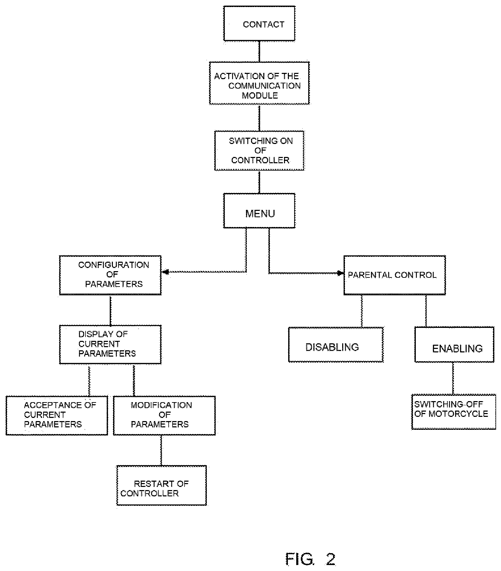

The way of operation of this parental control system is that which is explained below and represented in the diagram of figure 2.

When the starter of the motorcycle is actuated, the wireless connection of the controller (1) with the mobile terminal (3) is automatically established through the communication module (2) via Bluetooth and the controller (1) is electrically powered; the computer application displaying a menu on the mobile terminal (3) where the supervisor selects a parameter configuration option, or a parental control option.

In the parameter configuration option, the system displays the current parameters of the controller on the screen of the mobile terminal (3), and the supervisor can accept of modify said current parameters, by sending the selected parameters to the controller (1) through the communication module (2), the controller being restarted in the event that new parameters are chosen.

In the parental control option, the application displays a screen on the mobile terminal (3) where the supervisor may enable or disable the parental control, and may select a preprogrammed cut-off distance, said mobile terminal (3) sending the selected options to the controller (1).

When the parental control is enabled, the supervisor can send an immediate stop signal for the motorcycle to the controller (1) by selecting this option in the application of the mobile terminal (3).

When the parental control is enabled, if the wireless connection between the controller (1) and the mobile terminal (3) is interrupted, the controller (1) automatically causes the stop of the motorcycle.

Thereby, the system guarantees that when the parental control is enabled the motorcycle automatically stops when it moves away from the mobile terminal (3) by a distance greater than the coverage of the communication module (2) via Bluetooth that is estimated approximately 30 meters, or a greater distance than the preset cut-off distance.

Once the nature of the invention has been sufficiently described, as well as an example of a preferred embodiment, it is stated for the pertinent that all materials, shape, size and disposition of the described elements may be amended, as long as the essential features of the invention claimed as follows are not modified.

## Claims

1. Parental control system for motorcycles comprising a controller (1) installed on the motorcycle (M) and equipped with: -inputs (11) for capturing different operating parameters (power, speed, accelerator sensitivity, engine regeneration, etc.) of the motorcycle (M), and outputs (12) for controlling the operation of a series of components of the motorcycle dependent on adjustable parameters entered in said controller (1), **comprising**:
- a Bluetooth wireless communication module (2) installed on the motorcycle (M), connected to the controller (1) and to an external parental control mobile terminal (3) constituted by a smartphone, tablet or similar, which can be carried by a supervisor of the user of the motorcycle (M), and
- a computer application suitable for:
- displaying, on the mobile terminal (3), current motorcycle (M) operating parameters stored in the controller (1), and
remotely accepting or modifying said operating parameters; and
- enabling or disabling a parental control,
**characterized in that**
- the Bluetooth wireless communication module (2) is provided with a single Bluetooth connection port through which the Bluetooth wireless communication module (2) connects with the external parental control mobile terminal (3),.
when the parental control is enabled, the computer application sends to the controller (1) an immediate stop signal for the motorcycle (M) when the supervisor chooses this option in the computer application, and causes an automatic stop of the motorcycle (M) by means of the controller (1),
when the Bluetooth wireless connection between the controller (1) and said mobile terminal (3) is interrupted, or
when a preprogrammed cut-off distance between the controller (1) and the mobile terminal (3) is exceeded.

## Patentansprüche

1. Kindersicherungssystem für Motorräder mit auf dem Motorrad (M) installierbarem Steuergerät (1), ausgestattet mit: - Inputs (11) zur Erfassung verschiedener Betriebsparameter (Leistung, Geschwindigkeit, Gaspedalempfindlichkeit, Motorregeneration usw.) des Motorrads (M) und Outputs (12) zur Steuerung des Betriebs einer Reihe von Motorradkomponenten, je nach Eingabe der in besagtem Steuergerät (1) einstellbaren Parameter, **einschließlich**:
- einem am Motorrad (M) installierbaren drahtlosen Bluetooth-Kommunikationsmodul (2), das mit dem Steuergerät (1) und mit einem externen mobilen Endgerät (3) für die Kindersicherung - einem Smartphone, Tablet oder Ähnlichem - verbunden ist, das von einer Aufsichtsperson des Benutzers des Motorrads (M) getragen werden kann, und
- einer Computeranwendung, die geeignet ist für:
- die Anzeige der aktuellen Betriebsparameter des Motorrads (M), die im Steuergerät (1) gespeichert sind, auf dem mobilen Endgerät (3) und die Fernannahme oder -modifizierung der Betriebsparameter; und
- die Aktivierung oder Deaktivierung einer Kindersicherung
**dadurch gekennzeichnet, dass**
- das drahtlose Bluetooth-Kommunikationsmodul (2) mit einem einzigen Bluetooth-Verbindungsanschluss versehen ist, über den das drahtlose Bluetooth-Kommunikationsmodul (2) mit dem externen mobilen Endgerät (3) für die Kindersicherung verbunden wird.
Ist die Kindersicherung aktiviert, sendet die Computeranwendung ein sofortiges Stoppsignal für das Motorrad (M) an das Steuergerät (1), sobald die Aufsichtsperson diese Option in der Computeranwendung auswählt, und es erfolgt der automatische Stopp des Motorrads (M) durch das Steuergerät (1),
wenn die drahtlose Bluetooth-Verbindung zwischen dem Steuergerät (1) und dem mobilen Endgerät (3) unterbrochen wird, oder
wenn ein vorprogrammierter Abstand zwischen dem Steuergerät (1) und dem mobilen Endgerät (3) überschritten wird.

## Revendications

1. Système de contrôle parental pour motocycle comprenant un contrôleur (1) installé sur le motocycle (M) et équipé de : - entrées (11) pour capturer différents paramètres de fonctionnement (puissance, vitesse, sensibilité de l'accélérateur, régénération du moteur, etc.) du motocycle (M), et sorties (12) pour contrôler le fonctionnement d'une série de composants du motocycle en fonction de paramètres réglables saisis sur ledit contrôleur (1), comprenant :
- un module de communication sans fil Bluetooth (2) installé sur le motocycle (M), connecté au contrôleur (1) et à un terminal mobile de contrôle parental externe (3) constitué d'un smartphone, d'une tablette ou similaire, qui peut être porté par un superviseur de l'utilisateur du motocycle (M), et
- une application informatique adaptée pour :
- afficher, sur le terminal mobile (3), les paramètres de fonctionnement actuels du motocycle (M) stockés sur le contrôleur (1), et
accepter ou modifier à distance lesdits paramètres de fonctionnement ; et
- activer ou désactiver un contrôle parental,
**caractérisé en ce que**
- le module de communication sans fil Bluetooth (2) est doté d'un seul port de connexion Bluetooth à travers lequel le module de communication sans fil Bluetooth (2) se connecte au terminal mobile de contrôle parental externe (3),
lorsque le contrôle parental est activé, l'application informatique envoie au contrôleur (1) un signal d'arrêt immédiat pour le motocycle (M) lorsque le superviseur choisit cette option dans l'application informatique, et provoque un arrêt automatique du motocycle (M) au moyen du contrôleur (1),
lorsque la connexion sans fil Bluetooth entre le contrôleur (1) et ledit terminal mobile (3) est interrompue, ou
lorsqu'une distance de coupure préprogrammée entre le contrôleur (1) et le terminal mobile (3) est dépassée.
